# EUROPEAN PATENT SPECIFICATION

(11) **EP 1 694 771 B1**
(45) Date of publication and mention of the grant of the patent: **10.03.2010**
(21) Application number: 04814804.3
(22) Date of filing: 17.12.2004
(51) Int. Cl.: C08L 67/00, C08L 67/02

(54) **PROCESSES FOR DISPERSING AN IMPACT MODIFIER IN A MACROCYCLIC POLYESTER OLIGOMER**
VERFAHREN ZUM DISPERGIEREN EINES SCHLAGZÄHIGKEITSMODIFIKATORS IN EINEM MAKROCYCLISCHEN POLYESTEROLIGOMER
PROCEDES DE DISPERSION D'UN MODIFICATEUR D'IMPACT DANS UN OLIGOMERE DE POLYESTER MACROCYCLIQUE

(30) Priority: 19.12.2003 US 530942 P
(43) Date of publication of application: 30.08.2006
(73) Proprietor: Cyclics Corporation, Schenectady, NY 12308 (US)
(72) Inventor: BAHR, Steven, R., Schenectady, NY 12309 (US); BAGHEL, Sunita, S., Loudonville, NY 12211 (US)
(74) Representative: McCall, John Douglas
(86) International application number: PCT/US2004/042666
(87) International publication number: WO 2005/063882

(56) References cited:
- EP-A- 0 566 313
- EP-A- 1 111 012

## Description

### Field of the Invention

This invention relates generally to polymers and processes for manufacturing polymers. More particularly, in certain embodiments, the invention relates to macrocyclic polyester oligomer compositions containing one or more impact modifiers and processes for dispersing an impact modifier in a macrocyclic polyester oligomer.

### Background of the Invention

EP-A-1 111 012 describes a process for preparing a macrocyclic polyester oligomer composition. Polyesters such as polybutylene terephtalate (PBT) and polyethylene terephthalate (PET) possess a good mix of thermal, chemical, and mechanical properties for a wide variety of applications. However, PBT and PET have limited toughness. Addition of impact modifiers into polyester can improve the impact performance of the resulting polyester composition. But polyester compositions typically have relatively high viscosities, so the amount of impact modifiers and/or other fillers that can be added into such compositions generally is limited.

Furthermore, directly mixing an impact modifier into a polyester does not provide a distribution of impact modifier in the polymer matrix sufficient to impart the optimum benefit of the impact modifier to the composition. Additionally, poor distribution of impact modifier in the polymer matrix may adversely affect thermal, chemical, and/or mechanical properties of the composition.

Therefore, there exists a need for methods of adequately distributing an impact modifier in the polymer matrix of a polyester composition:

### Summary of the Invention

The invention provides methods for dispersing one or more impact modifiers into a macrocyclic polyester oligomer (MPO) - for example, the cyclic form of poly(1,4-butylene terephthalate) (cPBT) - to produce a composition that retains the low viscosity processing advantages associated with MPO's. The MPO composition may then be polymerized to produce a material and/or an article of manufacture with improved material performance properties, such as impact resistance and tensile strength.

The methods provide improved dispersion of one or more impact modifiers in a polymer matrix by dint of high shear, low temperature mixing with one or more MPO's, followed by polymerization of the MPO's. The improved dispersion results in improved material properties, as described herein. The methods disclosed also allow further introduction of fiber and/or filler into MPO at higher levels than are possible with direct incorporation into a polymerized material, due to the low melt viscosity and other processing advantages conferred by the MPO.

MPO's have unique properties that make them attractive as matrix-forming resins for engineering thermoplastic composites. For example, MPO's exhibit low melt viscosity, thereby providing improved processing flexibility. Low melt viscosity allows, for example, the macrocyclic oligoester to impregnate a dense fibrous preform easily. Furthermore, certain macrocyclic polyester oligomers melt and polymerize at temperatures well below the melting point of the resulting polymer. Upon melting and in the presence of an appropriate catalyst, polymerization and crystallization can occur virtually isothermally. In the case of certain macrocyclic polyester oligomers, for example, cPBT demolding can take place at the polymerization temperature, for example, at a temperature of about 180°C to about 200°C. The resulting polyester polymer (for example, PBT) solidifies quickly at that temperature without cooling. As a result, the time and expense required to thermally cycle a tool is favorably reduced.

It has been discovered that it is advantageous to add an impact modifier to cPBT before polymerization into PBT, or, more generally, to add an impact modifier to an MPO before polymerization into a polymer, In an alternative embodiment, the cPBT (or other MPO) is partially polymerized into PBT at the time of introduction of the impact modifier. An MPO composition prepared according to the processes of the present invention readily polymerizes to provide composites and/or articles of manufacture with improved ductility, impact resistance, tensile strength, and other properties.

The presence of well-dispersed impact modifiers in the MPO composition confers in the resulting polymerized product improved impact resistance without significantly decreasing the rate of polymerization of the MPO, and without affecting the ability of the MPO to polymerize and crystallize essentially isothermally. Furthermore, the presence of the well-dispersed impact modifiers in the MPO improves the toughness and ductility of the polymerized product. The processes of the present invention thus provide improved impact-resistant composites that could not be obtained using impact-modified PBT, where the impact modifier is introduced directly into the polymerized product.

In one aspect, the invention provides a process for preparing a macrocyclic polyester oligomer composition, the process comprising the steps of: providing an impact modifier and a macrocyclic polyester oligomer; and mixing the impact modifier with the macrocyclic polyester oligomer using a twin-screw extruder to produce a macrocyclic polyester oligomer composition, wherein the macrocyclic polyester oligomer comprises a structural repeat unit of the formula 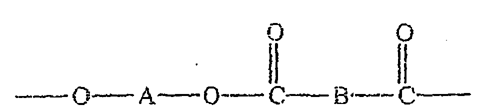 wherein A is an alkylene, or a cycloalkylene or a mono- or polyoxyalkylene group, and B is a divalent aromatic or alicyclic group.

In a preferred embodiment, at least a portion of the macrocyclic polyester oligomer is a solid during at least part of the mixing step. In some embodiments, substantially all of the macrocyclic polyester oligomer is a solid during the mixing step. In certain embodiment, at least about 30 weight percent of the macrocyclic polyester oligomer is a solid during the mixing step.

The mixing step is conducted using a twin-screw extruder. The extruder may perform dispersive and distributive mixing. The residence time in the twin-screw extruder may be between about 30 seconds and about 90 seconds, for example. The mixing step may be conducted at a temperature less than or equal to about 150°C, and preferably, at a temperature between about 70°C and about 140°C.

Various kinds of impact modifiers may be used to practice the present invention. Preferred impact modifiers are those that include at least one functional group that is capable of reacting with at least one terminal group of the macrocyclic polyester oligomer. Examples of suitable impact modifiers include, but are not limited to, various known graft copolymers, core shell polymers, and block copolymers. These polymers may include at least one monomer selected from the group consisting of an alkene, an alkadiene, an arene, an acrylate, and an alcohol.

In some embodiments, the impact modifier(s) may include a functionalized ethylene copolymer. The functionalized ethylene copolymer may include polar reactive and/or polar non-reactive monomer. Further examples of suitable impact modifiers include, but are not limited to, a terpolymer including ethylene, butylacrylate and glycidylmethacrylate, a polyolefins, a copolymer including maleic anhydride, a core shell copolymer having a core comprising acrylate, butadiene, styrene, or combinations thereof, a copolymer including ethylene, butylacrylate, methyl acrylate, or combinations thereof, a resin including glycidylmethacrylate, maleic anhydride, or combinations thereof, and an epoxy-functionalized resin.

The impact modifier(s) may be present in the macrocyclic polyester oligomer composition in an amount up to about 90 weight percent, up to about 75 weight percent, up to about 70 weight percent, up to about 50 weight percent, up to about 30 weight percent, up to about 20 weight percent, or up to of at least about 10 weight percent, for example. The amount of impact modifier(s) that are introduced into the macrocyclic polyester oligomer may be chosen according to the type(s) of macrocyclic polyester oligomers, the type of impact modifiers, and/or the polymerization catalysts used, as well as the desired properties of the polymerized product, for example.

In another aspect of the invention there is provided a process for preparing a macrocyclic polyester oligomer composition, the process comprising the steps of.
(a) providing an impact modifier and a macrocyclic polyester oligomer; and
(b) mixing the impact modifier with the macrocyclic polyester oligomer at a high shear using a twin-screw extruder to produce a macrocyclic polyester oligomer composition;
   wherein the macrocyclic polyester oligomer comprises a structural repeat unit of the formula 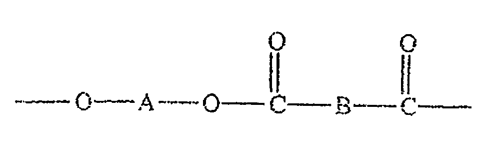 wherein A is an alkylene, or a cycloalkylene or a mono- or polyoxyalkylene group, and B is a divalent aromatic or alicyclic group, and
   wherein at least a portion of the macrocyclic polyester oligomer is a solid during at least part of the mixing step.

In some embodiments, the heating step may include heating the macrocyclic polyester oligomer composition in the presence of a catalyst. In certain embodiments, the macrocyclic polyester oligomer composition includes a catalyst such as butyldihydroxytin chloride.

The invention provides a process for preparing a macroyclic polyester oligomer composition including the steps of providing an impact modifier and a macrocyclic polyester oligomer, and mixing the impact modifier with the macrocyclic polyester oligomer using a twin-screw extruder to produce a macrocyclic polyester oligomer composition. The macrocyclic polyester oligomer may include a structural repeat unit of the formula: 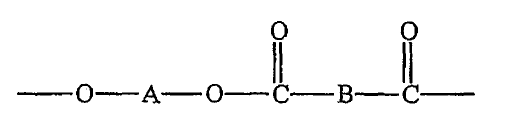 wherein A is an alkylene, or a cycloalkylene or a mono- or polyoxyalkylene group, and B is a divalent aromatic or alicyclic group.

In some embodiments, the mixing step is is conducted at a temperature less than or equal to 150°C, preferably between about 70°C and about 140°C. The mixing step is conducted using a twin-screw extruder. The extruder may perform dispersive and distributive mixing. In certain embodiments, the residence time in the twin-screw extruder may be between about 30 seconds and about 90 seconds. In some embodiments, substantially all of the macrocyclic polyester oligomer is a solid during the mixing step. In certain embodiments, at least about 30 weight percent of the macrocyclic polyester oligomer is a solid during the mixing step.

Impact modifiers provided hereinabove are suitable for use with this aspect of the invention. As provided above, the impact modifiers may be present in the MPO composition in an amount up to about 90 weight percent, up to about 75 weight percent, up to about 70 weight percent, up to about 50 weight percent, up to about 30 weight percent, up to about 20 weight percent, or up to of at least about 10 weight percent, for example. The amount of impact modifier(s) that are introduced into the macrocyclic polyester oligomer may be chosen according to the type(s) of macrocyclic polyester oligomers, the type of impact modifiers, and/or the polymerization catalysts used, as well as the desired properties of the polymerized product, for example.

Articles of manufacture produced using the above processes are also within the scope of the present invention.

### Brief Description of the Drawings

The objects and features of the invention can be better understood with reference to the drawings described below, and the claims. The drawings are not necessarily to scale, emphasis instead being placed upon illustrating the principles of the invention.

Figure 1 is an optical electron micrograph (100X) of an impact-modified polyester composition made by melt mixing impact modifier into MPO and subsequently polymerizing the MPO.

Figure 2 is an optical electron micrograph (100X) of an impact-modified polyester composition made according to one embodiment of the invention, where dispersion of impact modifier is improved over that of the composition of Figure 1.

### Description of the Invention

The present invention provides methods of dispersing one or more impact modifiers into macrocyclic polyester oligomers (MPO's). It has been discovered that the combination of high shear and low mixing temperature allows excellent dispersion of impact modifiers in MPO's and provides an impact-modified MPO composition with low melt viscosity and high wettability that can be used to produce compounds with high filler loading. For example overall filler levels of up to 30wt.%, 40wt.%, 50wt.%, 60wt.%, 70wt.%, 80wt.%, or 90wt.% may be achieved. The impact-modified MPO composition, with or without loadings of additional filler and/or fiber, subsequently can be polymerized to produce a material, component, and/or article of manufacture with improved properties, for example, increased toughness, ductility, and/or impact resistance.

Throughout the description, where compositions, mixtures, blends, and composites are described as having, including, or comprising specific components, or where processes and methods are described as having, including, or comprising specific steps, it is contemplated that, additionally, there are compositions, mixtures, blends, and composites of the present invention that consist essentially of, or consist of, the recited components, and that there are processes and methods of the present invention that consist essentially of, or consist of, the recited processing steps.

It should be understood that the order of steps or order for performing certain actions is immaterial so long as the invention remains operable. Moreover, two or more steps or actions may be conducted simultaneously.

The following general definitions may be helpful in understanding the various terms and expressions used in this specification.

### Definitions

As used herein, "macrocyclic" is understood to mean a cyclic molecule having at least one ring within its molecular structure that contains 5 or more atoms covalently connected to form the ring.

As used herein, an "oligomer" is understood to mean a molecule that contains one or more identifiable structural repeat units of the same or different formula.

As used herein, a "macrocyclic polyester oligomer" is understood to mean a macrocyclic oligomer containing structural repeat units having an ester functionality. A macrocyclic polyester oligomer typically refers to multiple molecules of one specific repeat unit formula. However, a macrocyclic polyester oligomer also may include multiple molecules of different or mixed formulae having varying numbers of the same or different structural repeat units. In addition, a macrocyclic polyester oligomer may be a co-polyester or multi-component polyester oligomer, for example, an oligomer having two or more different structural repeat units having ester functionality within one cyclic molecule.

As used herein, "substantially homo- or co-polyester oligomer" is understood to mean a polyester oligomer wherein the structural repeat units are substantially identical or substantially composed of two or more different structural repeat units, respectively.

As used herein, an "alkylene group" is understood to mean -CₙH₂ₙ-, where n ≥ 2.

As used herein, a "cycloalkylene group" is understood to mean a cyclic alkylene group, -CₙH₂ₙ₋ₓ-, where x represents the number of H's replaced by cyclization(s).

As used herein, a "mono- or polyoxyalkylene group" is understood to mean [-(CH₂)ₘ-O-]ₙ-(CH₂)ₘ-, wherein m is an integer greater than 1 and n is an integer greater than 0.

As used herein, a "divalent aromatic group" is understood to mean an aromatic group with links to other parts of the macrocyclic molecule. For example, a divalent aromatic group may include a meta- or para- linked monocyclic aromatic group (e.g., benzene).

As used herein, an "alicyclic group" is understood to mean a non-aromatic hydrocarbon group containing a cyclic structure within.

As used herein, a "C₁₋₄ primary alkyl group" is understood to mean an alkyl group having 1 to 4 carbon atoms connected via a primary carbon atom.

As used herein, a "C₁₋₁₀ alkyl group" is understood to mean an alkyl group having 1 to 10 carbon atoms, including straight chain or branched radicals.

As used herein, a "methylene group" is understood to mean -CH₂-.

As used herein, an "ethylene group" is understood to mean -CH₂-CH₂-.

As used herein, a "C₂₋₃ alkylene group" is understood to mean -CₙH₂ₙ-, where n is 2 or 3.

As used herein, a "C₂₋₆ alkylene group" is understood to mean -CₙH₂ₙ-, where n is 2-6.

As used herein, "substituted phenyl group" is understood to mean a phenyl group having one or more substituents. A substituted phenyl group may have substitution pattern that is recognized in the art. For example, a single substituent may be in the ortho, meta or para positions. For multiple substituents, typical substitution patterns include, for example, 2,6-, 2,4,6-, and, 3,5- substitution patterns.

As used herein, a "filler" is understood to mean a material other than a macrocyclic polyester oligomer or a polymerization catalyst that may be included in a macrocyclic polyester oligomer composition. A filler may be used to achieve a desired purpose or property, and may be present or be transformed into known and/or unknown substances in the resulting polyester polymer. For example, the purpose of the filler may be to provide stability, such as chemical, thermal, or light stability, to the blend material or the polyester polymer product, and/or to increase the strength of the polyester polymer product. A filler also may provide or reduce color, provide weight or bulk to achieve a particular density, provide reduced gas and vapor permeability, provide flame or smoking resistance (for example, be a flame retardant), be a substitute for a more expensive material, facilitate processing, and/or provide other desirable properties such as thermal conductivity, electrical conductivity, and/or specific gravity. Illustrative examples of fillers are, among others, fumed silica, titanium dioxide, calcium carbonate, wollastonite, chopped fibers, fly ash, glass, glass fibers, glass microspheres, micro-balloons, crushed stone, nanoclay, linear polymers, monomers, organoclays, carbon nanotubes, pigments, and exfoliated graphite.

The following headers are provided as a general organizational guide and do not serve to limit support for any given element of the invention to a particular section of the Description.

### I. Macrocyclic Polyester Oligomer

Macrocyclic polyester oligomers that may be employed in this invention include, but are not limited to, macrocyclic poly(alkylene dicarboxylate) oligomers having a structural repeat unit of the formula: 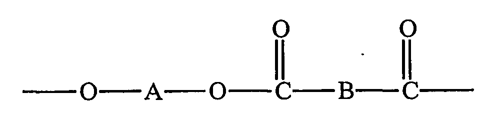 where A is an alkylene, or a cycloalkylene or a mono- or polyoxyalkylene group; and B is a divalent aromatic or alicyclic group.

Preferred macrocyclic polyester oligomers include macrocyclic poly(1,4-butylene terephthalate) (cPBT) and macrocyclic poly(ethylene terephthalate) (cPET), macrocyclic poly(1,3-propylene terephthalate) (cPPT), macrocyclic poly(1,4-cyclohexylenedimethylene terephthalate) (cPCT), and macrocyclic poly(1,2-ethylene 2,6-naphthalenedicarboxylate) (cPEN) oligomers, and copolyester oligomers comprising two or more of the above monomer repeat units.

Macrocyclic polyester oligomers may be prepared by known methods. Synthesis of the preferred macrocyclic polyester oligomers may include the step of contacting at least one diol of the formula HO-A-OH with at least one diacid chloride of the formula: 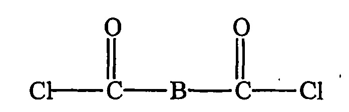 where A and B are as defined above. The reaction typically is conducted in the presence of at least one amine that has substantially no steric hindrance around the basic nitrogen atom. An illustrative example of such amines is 1 ,4-diazabicylo [2.2.2] octane (DABCO). The reaction usually is conducted under substantially anhydrous conditions in a substantially water immiscible organic solvent such as methylene chloride. The temperature of the reaction typically is between about -25°C and about 25°C. See, e.g., U.S. Patent No. 5,039,783 to Brunelle et al.

Macrocyclic polyester oligomers have also been prepared via the condensation of a diacid chloride with at least one bis(hydroxyalkyl) ester such as bis(4-hydroxybutyl) terephthalate in the presence of a highly unhindered amine or a mixture thereof with at least one other tertiary amine such as triethylamine, in a substantially inert organic solvent such as methylene chloride, chlorobenzene, or a mixture thereof. See, e.g., U.S. Patent No. 5,231,161 to Brunelle et al.

Another method for preparing macrocyclic polyester oligomers or macrocyclic copolyester oligomers is to depolymerize linear polyester polymers in the presence of an organotin or titanate compound. In this method, linear polyesters are converted to macrocyclic polyester oligomers by heating a mixture of linear polyesters, an organic solvent, and a transesterification catalyst such as a tin or titanium compound. The solvents used, such as o-xylene and o-dichlorobenzene, usually are substantially free of oxygen and water. See, e.g., U.S. Patent Nos. 5,407,984 to Brunelle et al. and 5,668,186 to Brunelle et al.

Macrocyclic polyester oligomers have been prepared from intermediate molecular weight polyesters by contacting a dicarboxylic acid or a dicarboxylate in the presence of a catalyst to produce a composition comprising a hydroxyalkyl-terminated polyester oligomer. The hydroxyalkyl-terminated polyester oligomer is heated to produce a composition comprising an intermediate molecular weight polyester which preferably has a molecular weight between about 20,000 Daltons and about 70,000 Daltons. The intermediate molecular weight polyester is heated and a solvent is added prior to or during the heating process to produce a composition comprising an MPO. See, e.g., U.S. Patent No. 6,525,164, to Faler.

Macrocyclic polyester oligomers that are substantially free from macrocyclic cooligoesters have been prepared by depolymerizing polyesters using the organo-titanate catalysts described in co-owned U.S. Patent No. 6,787,632 to Phelps et al.

It is also within the scope of the invention to employ macrocyclic homo- and copolyester oligomers to produce homo- and co-polyester polymers, respectively. Therefore, unless otherwise stated, an embodiment of a composition, article, or process that refers to a macrocyclic polyester oligomer also includes a co-polyester embodiments.

In one embodiment, macrocyclic ester homo- and co-oligomers used in this invention include oligomers having a general structural repeat unit of the formula: 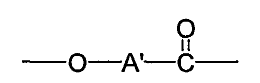 where A' is an alkylene, cycloalkylene, or mono- or polyoxyalkylene group, and where A' may be substituted, unsubstituted, branched, and/or linear. Example MPO's of this type include butyrolactone and caprolactone, where the degree of polymerization is one, and 2,5-dioxo-1,4-dioxane, and lactide, where degree of polymerization is two. The degree of polymerization may alternatively be 3, 4, 5, or higher. Molecular structures of 2,5-dioxo-1,4-dioxane and lactide, respectively, appear below:

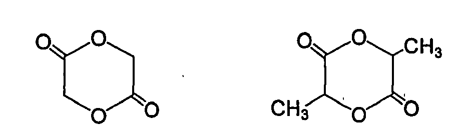

In one embodiment, a macrocyclic polyester oligomer used in the invention includes specie of different degrees of polymerization. Here, a degree of polymerization (DP) with respect to the MPO means the number of identifiable structural repeat units in the oligomeric backbone. The structural repeat units may have the same or different molecular structure. For example, an MPO may include dimer, trimer, tetramer, pentamer, and/or other species.

### II. Impact Modifiers

Various kinds of impact modifiers may be used to practice the present invention. Preferred impact modifiers include those having at least one functional group capable of reacting with at least one terminal group of the macrocyclic polyester oligomer. Examples of suitable impact modifiers include, but are not limited to, various known graft copolymers, block copolymers, and core shell polymers. These polymers may be made up of monomer repeat units that can be classified as alkenes, alkadienes, arenes, acrylates, esters, and/or alcohols.

Core shell impact modifiers may be categorized according to the material from which the elastomeric core is made. Acrylic-based core shell impact modifiers (AIMs) generally have a core composed of butyl acrylate (e.g., Durastrength^{®} 400 and 400R from Atofina Chemicals, Pliladelphia, PA), and MBS core shell impact modifiers generally have a core composed of a copolymer of styrene and butadiene (e.g., Paraloid^{®} EXL-2691 from Rohm and Haas, Philadelphia, PA).

In certain embodiments of the invention, functionalized impact modifiers provide improved properties of the polymerized product of a macrocyclic oligoester composition in which the functionalized impact modifier has been dispersed. Impact modifiers particularly effective in this invention include, for example, and without limitation, various types of functionalized ethylene copolymers. Functionalized ethylene copolymers include copolymers of ethylene substituted with one or more functional groups that can react with at least one terminal group — for example, carboxylic and/or or hydroxylic terminal groups - of the macrocyclic polyester oligomer. These functionalized ethylene copolymers may be based upon either polar reactive or polar non-reactive monomers.

Various functionalized impact modifiers - for example, acrylic or MBS impact modifiers with functional groups - are capable of reacting with the carboxylic and/or hydroxylic end groups of the cPBT (or other macrocyclic oligoester) chains, thereby improving the performance of the modified blend. It appears that the functional groups (1) bond the impact modifier as a whole to the polymer matrix, and (2) modify the interfacial energy between the polymer matrix and the impact modifier. Thus, impact modifiers with functional groups tend to evenly distribute themselves within the matrix of the macrocyclic polyester oligomer. It also appears that the even distribution (and/or dispersion) of impact modifier within the polymer matrix of the subsequently polymerized product provides an increase in tensile and impact strength.

Examples of impact modifiers that are capable of reacting with the carboxylic and/or hydroxylic end groups of the macrocyclic oligoester chains include, but are not limited to, copolymers of ethylene and an acrylic derivative (e.g., Elvaloy^{®} PTW from DuPont, Wilmington, DE and Lotader^{®} resins from Atofina Chemicals, Inc., Philadelphia, PA), polyolefins and copolymers containing maleic anhydride or glycidyl methacrylate (e.g., Fusabond^{®} resins from DuPont, Exxelor^{®} from ExxonMobil Chemicals, Houston, TX, and Lotryl^{®} resins from Atofina Chemicals, Philadelphia, PA), thermoplastic elastomers (e.g., Hytrel^{®} from DuPont and Kraton^{®} from Shell Oil Company of Houston, TX), acrylic-based rubbers (e.g., Blendex® from GE Company, GE Plastics, of Pittsfield, MA), epoxy-functionalized alcohols, diols, and polyols (e.g., Heloxy^{®} from Resolution Performance Products, Houston, TX), and core shell impact modifiers (e.g., Paraloid^{®} EXL-2691 from Rohm and Haas, Company, Philadelphia, PA).

Terpolymers of ethylene, butylacrylate (BA) and glycidylmethacrylate (E/nBA/GMA) may be used in the methods of the invention and include, for example, Elvaloy® PTW. Terpolymers with a high level of butylacrylate exhibit favorable low temperature flexibility and favorable thermal stability, which makes them suitable as high performance impact modifiers for high temperature engineering polymers. Because of its epoxy functionality, Elvaloy® PTW, and other such terpolymers, can be used as an adhesion promoter or compatibilizer between polar and nonpolar polyolefins (PE, ethylene acrylates, PP and other reactive polymers) that contain hydroxyl and carboxylic acid functionalities. Such materials are also suitable as impact modifiers for virgin or glass fiber reinforced PET and PBT, and can be used for other engineering polymers, as well.

Polyolefins and copolymers grafted with maleic anhydride may be used in the methods of the invention and include, for example, DuPont™ Fusabond® resins. As a coupling agent in glass-filled polypropylene, these resins are capable of reacting with the functional groups at the surface of the filler, while the backbone of the polymer is miscible with the base polypropylene. In this way, the resin acts to bond the filler into the polymer matrix. The result is improved tensile and impact strength of the composite. For example, if mixing efficiency is high, as little as 1% of such a resin may yield improvements in tensile and impact strength of the composite.

Acrylate-based specialty impact modifiers for engineering polymers, such as Durastrength® 400 and 400R, provide favorable impact resistance at low temperatures (for example, as low as about -50°C) with favorable weathering resistance. Such impact modifiers are effective, for example, in injection-molded polyethylene terephthalate for automotive parts (roof racks, under-the-hood parts).

MBS impact modifiers may be used in the methods of the invention and include, for example, Rohm and Haas Paraloid® EXL-2691. An MBS core-shell copolymer consists of a butadiene-containing polymer as the soft-core material surrounded by a harder methacrylate-styrene outer shell. This type of copolymer structure allows it to be compounded in engineering thermoplastics without letting the individual rubber particles become unfavorably deformed in the matrix.

Copolymers of ethylene butyl acrylate (EBA) and of ethylene-methyl acrylate (EMA) may be used in the methods of the invention and include, for example, LOTRYL® by Atofina, and other acrylic derivatives. As a result of their chemical structure, such compounds have good thermal stability, and can extrude favorably in a wide temperature range.

Resins with glycidyl methacrylate (GMA) or maleic anhydride (MAH) groups may be used in the methods of the invention and include, for example, Lotader® Resins by Atofina. These materials offer favorable reactivity, thermal stability, and can be used, for example, in adhesives, pipeline coating, food packaging, automotive liners, and hot metals.

Epoxy-functionalized alcohols, diols and polyols may be used in the methods of the invention and include, for example, HELOXY® Epoxy Modifiers by Resolution Performance Products of Houston, TX. These polyfunctional materials may include aliphatics, which provide increased flexibility, chemical resistance, and mechanical performance. Areas of application for these impact modifiers include, for example, coatings and adhesives.

Maleic anhydride functionalized elastomeric ethylene copolymers may be used in the methods of the invention and include, for example, Exxelor® Modifiers by ExxonMobil Chemical Company of Houston, TX. The use of these copolymers in polyester compositions (e.g., compositions including PBT and PET) can improve impact strength at room temperature and at lower temperatures. Under favorable dispersion, the rubbery phase of these modifiers helps improve impact strength and elongation engineering thermoplastics.

Impact modifiers can be introduced into polyesters, polycarbonates, and polyester/polycarbonate blends to provide rubbery inclusions in the polymer matrix. Factors that influence the amount of impact resistance seen in thermoplastic polyester compositions include, for example, rubber content and type, particle size of the rubber, interparticle distance, and shape of the rubber particles. Impact modifier(s) may be present in the macrocyclic polyester oligomer composition in an amount of up to about 90 weight percent, up to about 75 weight percent, up to about 70 weight percent, up to about 50 weight percent, up to about 30 weight percent, up to about 20 weight percent, or up to at least about 10 weight percent, for example. The amount of impact modifier(s) in the composition may be chosen according to the type(s) of macrocyclic polyester oligomer(s), the type of impact modifier(s), and/or the polymerization catalysts used, as well as the desired properties of the polymerized product, for example.

### III. Polymerization Catalyst

Polymerization catalysts employed in the invention are capable of catalyzing the polymerization of the macrocyclic polyester oligomer. As with state-of-the-art processes for polymerizing macrocyclic polyester oligomers, organotin and organotitanate compounds are the preferred catalysts, although other catalysts may be used. For example, organotin compound 1,1,6,6-tetra-n-butyl-1,6-distanna-2,5,7,10-tetraoxacyclodecane may be used as polymerization catalyst. Other illustrative organotin compounds include n-butyltin(IV) chloride dihydroxide, dialkyltin(IV) oxides, such as di-n-butyltin(IV) oxide and di-n-octyltin oxide, and acyclic and cyclic monoalkyltin (IV) derivatives such as n-butyltin tri-n-butoxide, dialkyltin(IV) dialkoxides such as di-n-butyltin(IV) di-n-butoxide and 2,2-di-n-butyl-2-stanna-1,3-dioxacycloheptane, and trialkyltin alkoxides such as tributyltin ethoxide. See, e.g., U.S. Patent No. 5,348,985 to Pearce et al.

Also, trisstannoxanes having the general formula (I) shown below can be used as a polymerization catalyst to produce branched polyester polymers.

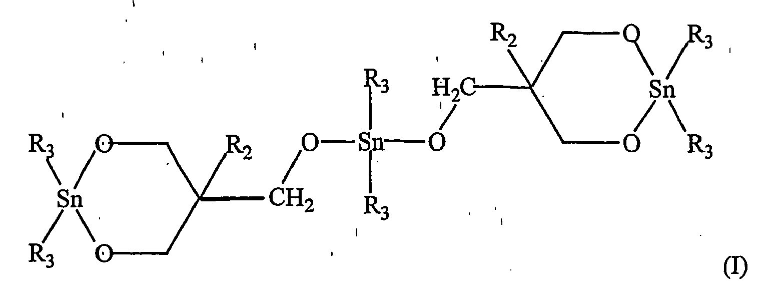

where R₂ is a C₁₋₄ primary alkyl group and R₃ is C₁₋₁₀ alkyl group.

Additionally, organotin compounds with the general formula (II) shown below can be used as a polymerization catalyst to prepare branched polyester polymers from macrocyclic polyester oligomers. 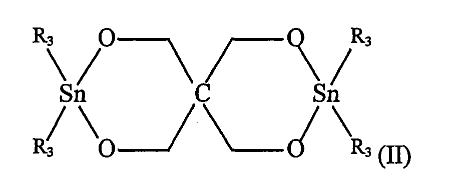 where R₃ is defined as above.

As for titanate compounds, tetra(2-ethylhexyl) titanate, tetraisopropyl titanate, tetrabutyl titanate, and titanate compounds with the general formula (III) shown below can be used as polymerization catalysts. 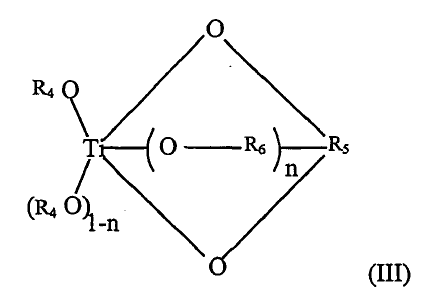 wherein: each R₄ is independently an alkyl group, or the two R₄ groups taken together form a divalent aliphatic hydrocarbon group; R₅ is a C₂₋₁₀ divalent or trivalent aliphatic hydrocarbon group; R₆ is a methylene or ethylene group; and n is 0 or 1.

Typical examples of titanate compounds with the above general formula are shown in Table 1.

**Table 1. Examples of Titanate Compounds Having Formula (III)**

| | |
|---|---|
| 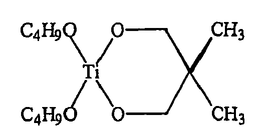 | 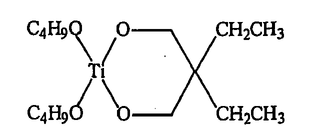 |
| Di-1-butyl 2,2-dimethylpropane-1,3-dioxytitanate | Di-1-butyl 2,2-diethylpropane-1,3-dioxytitanate |
| 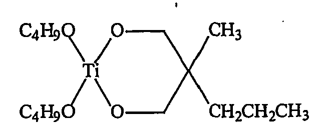 | 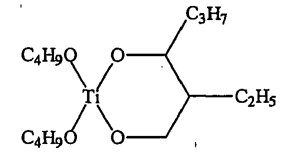 |
| Di-1-butyl 2(1-propyl)-2-methylpropane-1,3-dioxytitanate | Di-1-butyl 2-ethylhexane-1,3-dioxytitanate |
| 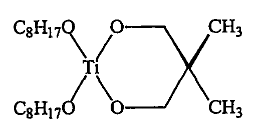 | 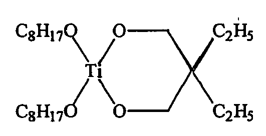 |
| Di(2-ethyl-1-hexyl) 2,2-dimethylpropane-1,3-dioxytitanate | Di(2-ethyl-1-hexyl) 2,2-diethylpropane-1,3-dioxytitanate |
| 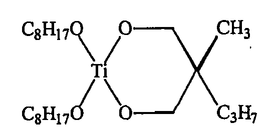 | 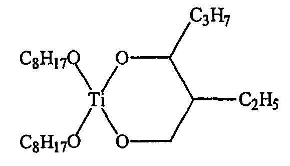 |
| Di(2-ethyl-1-hexyl) 2-(1-propyl)-2-methylpropane-1,3-dioxytitanate | Di(2-ethyl-1-hexyl) 2-ethylhexane-1,3-dioxytitanate |
| 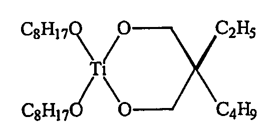 | |
| Di(2-ethyl-1-hexyl) 2-(1-butyl)-2-ethylpropane-1,3-dioxytitanate | |

Titanate ester compounds having at least one moiety of the following general formula have also been used as polymerization catalysts: 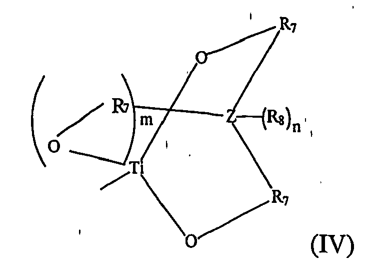 or 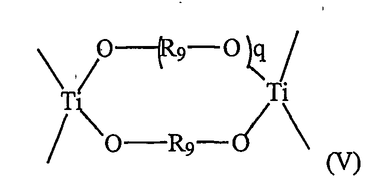 wherein: each R₇ is independently a C₂₋₃ alkylene group; R₈ is a C₁₋₆ alkyl group or unsubstituted or substituted phenyl group; Z is O or N; provided when Z is O, m = n = 0, and when Z is N, m = 0 or 1 and m + n = 1; each R₉ is independently a C₂₋₆ alkylene group; and q is 0 or 1.

Typical examples of such titanate compounds are shown below as formula (VI) and formula (VII):

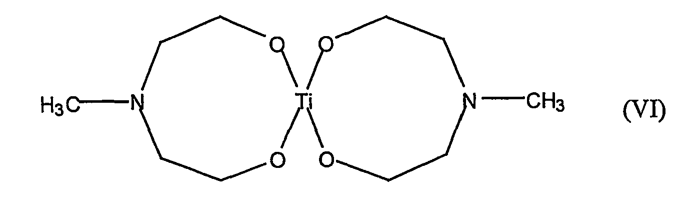

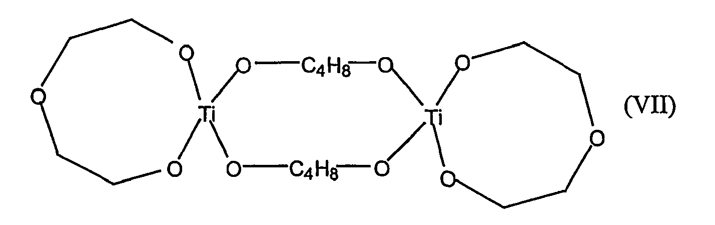

Other polymerization catalysts which may be used in the blend materials of the invention include aryl titanates, described, for example, in co-owned U.S. Patent Application No. 10/102,162, published as U.S. Patent Application Publication No. US 2003/0195328.
Also, polymer-containing organo-metal catalysts may be used in the blend materials of the invention. These include the polymer-containing catalysts described in co-owned U.S. Patent Application No. 10/040,530, published as U.S. Patent Application Publication No. US 2003/0162654, and to be issued as U.S. Patent No. 6,842,248.

### IV. Impact-Modified Macrocyclic Polyester Oligomer

The addition of impact modifiers can significantly improve the impact performance of polymer made from MPO if the impact modifier is well-dispersed in the polymer matrix. The invention includes methods of dispersing one or more impact modifiers in cPBT (or other MPO), prior to polymerization, in order to provide favorable dispersion of the impact modifier in the resulting polymer. The invention also includes MPO compositions provided thereby, as well as polymers and articles produced from such MPO compositions. Furthermore, the invention features the use of one or more functionalized impact modifiers in cPBT (or other MPO) to further improve the properties of the resulting polymer.

In an alternative embodiment, an impact modifier is added to the MPO by mixing the impact modifier in molten MPO. For example, an impact modifier may be added to molten cPBT using a low-shear incorporation method, such as using resin kettle mixing with a paddle-type stirrer at temperatures of about 160°C to about 190°C.

It has been found that both (1) high shear and (2) low temperature of the MPO/impact modifier incorporation process are important in achieving good dispersion of impact modifier in a polymerized product. For example, the impact modifier may be introduced into the MPO by applying high shear (for example, by using an extruder) within a temperature range in which at least a portion of the MPO is a solid. For example, the portion of the MPO that remains solid during the impact modifier incorporation process may be more than about 20% by weight, more than about 30% by weight, more than about 40% by weight, more than about 50% by weight, more than about 60% by weight, more than about 70% by weight, more than about 80% by weight, more than about 90% by weight, or,more than about 95% by weight, more than about 30% by volume, more than about 40% by volume, more than about 50% by volume, more than about 60% by volume, more than about 70% by volume, more than about 80% by volume, more than about 90% by volume, or more than about 95% by volume.

Even if the MPO does not remain solid during the incorporation process, the temperature of the MPO/impact modifier incorporation process may be maintained sufficiently low so that viscosity is high enough to provide adequate shear for dispersion of impact modifier in the MPO and in the resulting polymerized product. For example, where the MPO is cPBT, the incorporation process may be maintained at a temperature less than or equal to about 150°C, and preferably from about 70°C to about 140°C. In certain embodiments, incorporation is performed at a temperature that is less than or equal to about 160°C, less than or equal to about 140°C, less than or equal to about 130°C, less than or equal to about 120°C, less than or equal to about 110°C, less than or equal to about 100°C, less than or equal to about 90°C, less than or equal to about 80°C, or less than or equal to about 70°C. In certain embodiments, the temperature is maintained within a range from about 70°C to about 160°C, from about 70°C to about 150°C, from about 70°C to about 130°C, from about 70°C to about 120°C, from about 100°C to about 160°C, from about 100°C to about 150°C, from about 100°C to about 140°C, or from about 100°C to about 120°C during the incorporation process.

The higher viscosity of the MPO at lower temperatures, particularly in combination with the high shear mixing action of an extruder, provides improved dispersion of the impact modifier material into the MPO versus the dispersion achieved by mixing at higher temperatures, i.e. temperatures at which the MPO is completely melted. The improved dispersion results in significantly improved ductility and impact performance of the material following polymerization.

To affect the high shear dispersion, the dispersion is conducted using a twin-screw extruder. A twin-screw extruder performs both dispersive and distributive mixing. A suitable residence time in the twin-screw extruder may be between about 30 seconds and about 90 seconds, for example. Residence times higher and lower than these examples may be used as well. For example, a suitable residence time in a twin-screw extruder may be less than about 5 minutes, less than about 3 minutes, less than about 1 minute, or less than about 30 seconds; furthermore, a suitable residence time in a twin-screw extruder may be greater than about 15 seconds, greater than about 30 seconds, greater than about 60 seconds, greater than about 90 seconds, greater than about 120 seconds, or greater than about 180 seconds. In an embodiment, an impact modifier is incorporated into MPO using a twin-screw extruder with a residence time of about 30 seconds. The residence times referred to herein may be average residence times.

Other process equipment that may be suitable for incorporating an impact modifier in an MPO includes, for example and without limitation, internal mixers, pultruders, mixing mills, tilt body dispersion mixers, and kneaders. This process equipment may be used in combination with twin-screw extruders.

The processes of the present invention may further include the step of heating the macrocyclic polyester oligomer composition al ain elevated temperature to polymerize the macrocyclic polyester oligomer. The heating step may include heating the macrocyclic polyester oligomer composition in the presence of a catalyst. In certain embodiments, the macrocyclic polyester oligomer composition may include a catalyst such as butyldihydroxytin chloride. Other polymerization catalysts provided hereinabove may also be used.

Impact-modified macrocyclic oligoester compositions may be used in any combination of one or more processes, for example (and without limitation), rotational molding, injection molding, powder coating, compression molding, extrusion, pultrusion, resin film infusion, solvent prepreg, hot melt prepreg, resin transfer molding, filament winding, and roll wrapping processes. Articles produced by these processes are included in this invention. Examples of these processes are provided in co-owned U.S. Patent No. 6,369,157, Winclder et al., and co-owned U.S. Patent No. 6,420,047, Winckler et al.
These patents also provide details regarding macrocyclic oligoesters, fibers, fillers, polymerization catalysts, and other items that may be used as part of or in combination with this invention. The impact modified macrocyclic oligoester compositions (such as impact-modified cPBT), as described herein, may be used in combination with any of the processes and or materials described in the above-referenced patents.

### V. Experimental Examples

Examples of the addition of an impact modifier into a macrocyclic polyester oligomer (cyclic polybutylene terephthalate, cPBT) were performed with Paraloid® EXL-2691 as an impact modifier, manufactured by Rohm and Haas Company of Philadelphia, PA, and with cPBT manufactured by Cyclics Corporation of Schenectady, NY. Paraloid® EXL-2691 is a MBS core-shell copolymer that consists of a butadiene-containing polymer as the soft-core material surrounded by a harder methacrylate-styrene outer shell. Further details of the experimental procedures are included in the next section of this document.

**Example 1** (comparative): As a comparative example, a first composition containing about 10 wt.% Paraloid® EXL-2691 was prepared using a resin kettle fitted with a mechanical stirrer. After melting the cPBT at 170°C, the Paranoid® EXL-2691 was added and the mixture stirred for 30 minutes. Butyldihydroxytin chloride catalyst (sold as Fascat^{®} 4101, manufactured by Arkema, Inc. of Philadelphia, PA) was stirred in for 90 seconds followed by immediate cooling to produce a non-polymerized composition containing about 10% impact modifier and about 0.2 mol% Sn catalyst based on cPBT monomer repeat units.

The following provides more detail regarding how the first composition was prepared. A 4L resin kettle was fitted with a glass stir rod, teflon blade, ground glass sleeve and an inlet connected to nitrogen gas and vacuum. About 3143 g of cPBT was placed in the kettle and heated at about 170-190°C under vacuum until completely molten, then cooled to about 170°C under a N₂ blanket. Paraloid^{®} EXL-2691 (350 g) was then added and the mixture stirred for 30 minutes under vacuum. The contents were placed under N₂ and 10.51 g butyldihydroxytin chloride was added followed by placing under vacuum for 90 sec with stirring. After placing under a N₂ atmosphere, the mixture was quickly cooled by pouring onto a cookie sheet. GPC was used to confirm that no appreciable amount of polymerization had taken place. The mixture was allowed to crystallize, and the solid pieces after crystallization were ground into a fine powder. The powder was dried (80°C under vacuum) for 16 hours and fed into a 25 ton injection molding machine (model ES80/25ST from Engel Machinery Inc., Schwertberg, Austria), to produce tensile bars of polymerized cPBT with impact modifier. The barrel temperatures were between about 250-260°C, while the mold temperature was set at about 60°C. The cycle time was about 90 seconds. GPC analysis showed M_{w} of 85,000 relative to polystyrene standards. This molecular weight was similar to injection molded commercial PBT.

**Example 2** (comparative): A second composition containing about 10 wt.% Paraloid® EXL-2691 was prepared by blending cPBT and the impact modifier in a Randcastle single-screw extruder operated at barrel temperatures of about 125-135°C and quenching in cold water. After drying and grinding to a powder, the extrudate was powder blended with a catalyst/cPBT master batch (19 parts extrudate + 1 part catalyst/cPBT master batch). The catalyst/cPBT master batch contained 6.6 wt.% butyldihydroxytin chloride and 93.4 wt.% cPBT and was prepared by blending 0.66 pound of butyldihydroxytin chloride catalyst with 9.37 pounds cPBT in a twin-screw extruder as described in Examples 5 and 6, then grinding to a fine powder (passes through a U.S. 30-mesh sieve). The result of the powder blending of the cPBT/Paraloid® extrudate with the aforementioned catalyst/cPBT master batch was a non-polymerized cPBT composition containing about 10wt.% impact modifier and about 0.3 mol% Sn catalyst based on cPBT monomer repeat units.

The following provides more detail regarding how the second composition was prepared. About 1147 g of cPBT and about 127 g of Paraloid^{®} EXL-2691 were first powder blended and then fed into a single-screw extruder with a 0.5 inch-diameter screw (model RCP-0500 from Randcastle Extrusion Systems, Inc., Cedar Grove, NJ). Both the barrel and the die temperatures were in the range of about 125-135°C. The extruder screw speed was set to about 60 rotations per minute (rpm), and the current was in the range of about 1-3 amperes (A). The residence time of the mixture through the single-screw extruder was about 1-3 minutes. The mixture started melting about a third of the way along the length of the extruder. The melt-compounded mixture was isolated in cold water and determined by GPC analysis to have remained non-polymerized. The wet pellets were allowed to dry and crystallize at about 80°C and were ground to a fine powder. The ground pellets were then powder blended with the aforementioned catalyst/cPBT master batch. The material was injection molded as described in Example 1 producing tensile bars having M_{w} of 110,000 relative to polystyrene standards.

**Example 3** (comparative): A third composition containing about 15 wt.% Paranoid® EXL-2691 was prepared by blending cPBT and the impact modifier in a Randcastle single-screw extruder operated at barrel temperatures of about 125-135°C and quenching in cold water. After drying and grinding to a powder, the extrudate was powder blended with the catalyst/cPBT master batch described in Example 2 (19 parts extrudate + 1 part catalyst/cPBT masterbatch). This produced a non-polymerized cPBT composition containing about 15wt.% impact modifier and about 0.3 mol% Sn catalyst based on cPBT monomer repeat units.

The following provides more detail regarding how the third composition was prepared. About 1083 g of cPBT and about 191 g of Paraloid^{®} EXL-2691 were first powder blended and then fed into a single-screw extruder with a 0.5 inch-diameter screw (model RCP-0500 from Randcastle Extrusion Systems, Inc., Cedar Grove, NJ). The barrel and die temperatures were in the range of about 125-135°C. The extruder screw speed was set to about 60 rpm, and the current was in the range of about 1-3 A. The residence time of the mixture through the single-screw extruder was about 1-3 minutes. The mixture started melting about a third of the way along the length of the extruder. The melt-compounded mixture was isolated in cold water and determined to have not polymerized by GPC analysis. The wet pellets were allowed to dry and crystallize at about 80°C and were ground to a fine powder. The ground pellets were then powder blended with the aforementioned catalyst/cPBT master batch. The material was injection molded as described in Example 1 producing tensile bars having M_{w} of 103,107 relative to polystyrene standards.

**Example 4** (comparative): A fourth composition containing about 20 wt.% Paraloid® EXL-2691 was prepared by blending cPBT and the impact modifier in a Randcastle single-screw extruder operated at barrel temperatures of about 125-135°C and quenching in cold water. After drying and grinding to a powder, the extrudate was powder blended with the catalyst/cPBT masterbatch described in Example 2 (19 parts extrudate + 1 part catalyst/cPBT masterbatch). This produced a non-polymerized cPBT composition containing about 20wt.% impact modifier and about 0.3 mol% Sn catalyst based on cPBT monomer repeat units.

The following provides more detail regarding how the fourth composition was prepared. About 1019 g of cPBT and about 255 g of Paraloid^{®} EXL-2691 were first powder blended and then fed into a single-screw extruder with a 0.5 inch-diameter screw (model RCP-0500 from Randcastle Extrusion Systems, Inc., Cedar Grove, NJ). The barrel and die temperatures were in the range of about 125-135°C. The extruder screw speed was set to about 60 rpm, and the current was in the range of about 1-3 A. The residence time of the mixture through the single-screw extruder was about 1-3 minutes. The mixture started melting about a third of the way along the length of the extruder. The melt-compounded mixture was isolated in cold water and determined to have not polymerized by GPC analysis. The wet pellets were allowed to dry and crystallize at about 80°C and were ground to a fine powder. The ground pellets were then powder blended with the aforementioned catalyst/cPBT master batch. The material was injection molded as described in Example 1 producing tensile bars having M_{w} of 100,197 relative to polystyrene standards.

**Example 5**: A fifth composition containing about 20 wt.% Paraloid® EXL-2691 was prepared by blending cPBT and the impact modifier in a counter-rotating twin-screw extruder operated at barrel temperatures of about 125-135°C and quenching in cold water. After drying and grinding to a powder, the extrudate was powder blended with the catalyst/cPBT masterbatch described in Example 2 (19 parts extrudate + 1 part catalyst/cPBT masterbatch). This produced a non-polymerized cPBT composition containing about 20wt.% impact modifier and about 0.3 mol% Sn catalyst based on cPBT monomer repeat units.

The following provides more detail regarding how the fifth composition was prepared. About 1820 g of cPBT, about 455 g of Paraloid^{®} EXL-2691, and about 7.25 g of Ethanox 330 (Albemarle Chemical, Baton Rouge, LA) were tumbled-mixed in a plastic jar before drying in a vacuum oven to remove absorbed water for about 18-20 hours. The pre-blended mixture was fed into a counter-rotating twin-screw extruder (model LSM 30/34 from Leistritz Extruder Corp., Somerville, NY). The twin-screw extruder was outfitted with a face-cutter and had a 34 mm-diameter screw (28 L/D). The barrel and die temperatures were in the range of about 125-140°C. The extruder screw speed was set to about 200 rpm, and the materials fed at a rate that produced an output of about 10-15 pounds per hour during extrusion. The residence time of the mixture through the extruder was about 30 seconds. The current was about 20 A, and the voltage range was between about 132-440V. The melt temperature of the extrudate was approximately 130-150°C., The mixture started melting about a third of the way along the length of the extruder and formed a viscous melt. The melt-compounded extrudate was strand-pelletized using rotating knives as a cutter after passing through a chilled water trough. The wet pellets were allowed to dry and crystallize at about 80°C and were ground to a fine powder. The ground pellets were then powder blended with the aforementioned catalyst/cPBT master batch. The material was injection-molded as described in Example 1 producing tensile bars having M_{w} of 110,192 relative to polystyrene standards.

**Example 6**: A sixth composition containing about 30 wt.% Paranoid® EXL-2691 was prepared by blending cPBT and the impact modifier in a counter-rotating twin-screw extruder operated at barrel temperatures of about 125-135°C and quenching in cold water. After drying and grinding to a powder, the extrudate was powder blended with the catalyst/cPBT masterbatch described in Example 2 (19 parts extrudate + 1 part catalyst/cPBT masterbatch). This produced a non-polymerized one-part cPBT composition containing about 30wt.% impact modifier and about 0.3 mol% Sn catalyst based on cPBT monomer repeat units.

The following provides more detail regarding how the sixth composition was prepared. Approximately 7 lbs of cPBT and approximately 3 lbs of Paraloid^{®} EXL-2691 were tumbled-mixed in a plastic jar before drying in a vacuum oven to remove absorbed water for about 18-20 hours. The pre-blended mixture was fed into a counter-rotating twin-screw extruder (model LSM 30/34 from Leistritz Extruder Corp., Somerville, NY). The twin-screw extruder was outfitted with a face-cutter and had a 34 mm-diameter screw (28 L/D). The barrel and die temperatures were in the range of about 125-140°C. The extruder screw speed was set to about 200 rpm, and the materials fed at a rate that produced an output of 10-15 pounds per hour during extrusion. The residence time of the mixture through the extruder was about 30 seconds. The current was about 20 A, and the voltage range was between about 132-440 V. The melt temperature of the extrudate was approximately 130-150°C. The mixture started melting about a third of the way along the length of the extruder and formed a viscous melt. The melt-compounded extrudate was strand-pelletized using rotating knives as a cutter after passing through a chilled water trough. The wet pellets were allowed to dry and crystallize at about 80°C and were ground to a fine powder. The ground pellets were then powder blended with the aforementioned catalyst/cPBT master batch. The material was injection-molded as described in Example 1.

All of the compositions prepared in Examples 1-6 were dried at about 80°C under vacuum overnight and polymerized to PBT in an injection-molding machine (250-260°C barrel temperatures, 90 second cycle time, 60°C mold temp) to produce tensile bars. The tensile bars were analyzed for molecular weight build by GPC, tensile properties (ISO527; 50 mm/min strain rate), and notched Izod impact (ISO180) at 23°C. Results from these tests are reported in Table 2. The 16% tensile elongation break strain data shows that the impact modifier was better dispersed in the extruder-compounded compositions (Example 2-4) compared to the resin kettle compounded composition (Example 1). The extruder blended compositions also possessed notched Izod impact about 2-12 times as great as the Example 1 material and polymerized cPBT containing no impact modifiers. The properties of polymerized cPBT containing no impact modifiers were similar to those of the commercially available PBT Crastin® S600F10, manufactured by DuPont Engineering Polymers, Wilmington, DE (data provided by manufacturer).

A comparison of the notched Izod impact results of the composition of Example 5 with the results of the composition of Example 4 may be attributed to the use of a twin-screw extruder versus a single-screw extruder.

**Table 2. GPC and Physical Property Analyses of Formulations of Examples 1-5 as compared to polymerized cPBT containing no impact modifiers and a commercially available PBT.**

| **Property** **(Units)** | **GPC Mₙ** (g/mol) | **Tensile Strength at Yield** **(Mpa)** | **Yield Strain** **(%)** | **Break Strain** **(%)** | **Notched Izod Impact at 23°C** **(kJ/m²)** |
|---|---|---|---|---|---|
| **Example 1*** | 85,000 | 45.6 | 3.9 | 16 | 6 |
| **Example 2*§** | 110,000 | 45.2 | 3.8 | 110 | 13 |
| **Example 3*§** | 103,107 | 40.1 | 3.8 | 69 | 58 |
| **Example 4*§** | 100,197 | 36.6 | 3.9 | 66 | 70 |
| **Example 5**** | 110,192 | - | - | - | 81 |
| **Polymerized cPBT (0.3 mol% Sn Catalyst)*** | 96,320 | 55.3 | 3.5 | 160 | 6.7 |
| **Crastin^{®} S600F10 (Values from European Datasheet)** | 90,000 (est.) | 58 | 3.6 | >50 | 6 |
| * Polymerization was performed via injection molding (250-260°C barrel , 60 sec. mold, 90 sec. cycle time) | | | | | |
| § Randcastle single-screw extruder (barrel temps = 125-135°C, 60 rpm) | | | | | |
| ** Leistritz counter rotating twin-screw extruder (34mm, 28 L/D, 100-150°C barrel and die temperature) | | | | | |

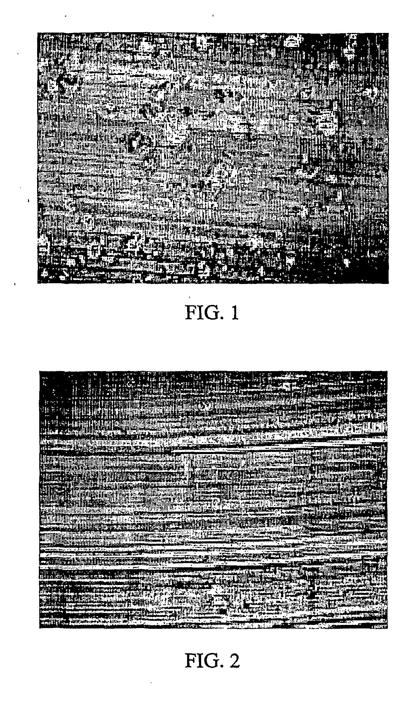

Figures 1 and 2 are optical electron micrographs of the compositions or Examples 1 and 2, respectively, following polymerization. A comparison of Figures 1 and 2 clearly demonstrates the improved dispersion of impact modifier in the polymer matrix obtained using the low temperature/high shear incorporation method of Example 2 versus the high temperature/low shear method of Example 1.

### VI. Equivalents

While the invention has been particularly shown and described with reference to specific preferred embodiments, it should be understood by those skilled in the art that various changes in form and detail may be made therein without departing from the scope of the invention as defined by the appended claims.

## Claims

1. A process for preparing a macrocyclic polyester oligomer composition, the process comprising the steps of:
providing an impact modifier and a macrocyclic polyester oligomer; and
mixing the impact modifier with the macrocyclic polyester oligomer using a twin-screw extruder to produce a macrocyclic polyester oligomer composition, wherein the macrocyclic polyester oligomer comprises a structural repeat unit of the formula 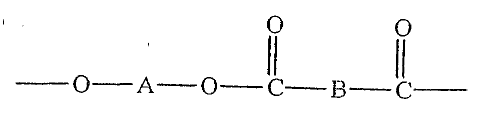 wherein A is an alkylene, or a cycloalkylene or a mono- or polyoxyalkylene group, and B is a divalent aromatic or alicyclic group.

2. A process as claimed in claim 1, wherein the mixing step is conducted at a temperature between 70 °C and 140 °C.

3. A process as claimed in claim 1 or 2, wherein the mixing step is conducted at a temperature less than or equal to 150 °C.

4. A process as claimed in any one of the preceding claims, wherein the twin-screw extruder performs dispersive and distributive mixing.

5. A process as claimed in any one of the preceding claims, wherein the residence time in the twin-screw extruder is between 30 seconds and 90 seconds.

6. A process as claimed in any one of the preceding claims, wherein substantially all of the macrocyclic polyester oligomer is a solid during the mixing step.

7. process as claimed in any one of claims 1 to 5, wherein at least 30 weight percent of the macrocyclic polyester oligomer is a solid during the mixing step.

8. A process as claimed in any one of the preceding claims, wherein the impact modifier comprises at least one functional group that is capable of reacting with at least one terminal group of the macrocyclic polyester oligomer.

9. A process as claimed in any one of the preceding claims, wherein the impact modifier comprises a graft copolymer, a core shell copolymer, or a block copolymer.

10. A process as claimed in any one of claims 1 to 8, wherein the impact modifier comprises a polymer comprising at least one monomer selected from the group consisting of an alkene, an alkadiene, an arene, an acrylate, and an alcohol.

11. A process as claimed in any one of claims 1 to 8, wherein the impact modifier comprises a functionalized ethylene copolymer.

12. A process as claimed in claim 11, wherein the functionalized ethylene copolymer comprises a polar non-reactive monomer.

13. A process as claimed in claim 11, wherein the functionalized ethylene copolymer comprises a polar reactive monomer.

14. A process as claimed in claim 1, wherein the impact modifier is selected from the group consisting of a terpolymer comprising ethylene, butylacrylate and glycidylmethacrylate; a polyolefin; a copolymer comprising maleic anhydride; a core shell copolymer having a core comprising acrylate, butadiene, styrene, or combinations thereof; a copolymer comprising ethylene, butylacrylate, methyl acrylate, or combinations thereof; a resin comprising glycidylmethacrylate, maleic anhydride, or combinations thereof; and an epoxy-functionalized resin.

15. A process as claimed in any one of the preceding claims, wherein the impact modifier is present in the macrocyclic polyester oligomer composition in an amount of at least 10 weight percent.

16. A process as claimed in any one of the preceding claims, wherein the impact modifier is present in the macrocyclic polyester oligomer composition in an amount of at least 20 weight percent.

17. A process as claimed in any one of the preceding claims, wherein the impact modifier is present in the macrocyclic polyester oligomer composition in an amount of at least 30 weight percent.

18. A process as claimed in any one of the preceding claims, further comprising heating the macrocyclic polyester oligomer composition at an elevated temperature to polymerize the macrocyclic polyester oligomer.

19. A process as claimed in claim 18, wherein the heating step comprises heating the macrocyclic polyester oligomer composition in the presence of a catalyst.

20. A process as claimed in claim 18, wherein the macrocyclic polyester oligomer composition further comprises a catalyst.

21. A process as claimed in claim 19 or 20, wherein the catalyst comprises butyldihydroxytin chloride.

22. An article of manufacture produced using the process of any of claims 1-21.

23. The process of any of claims 1 - 21, wherein at least a portion of the macrocyclic polyester oligomer is a solid during the mixing step.

24. A process for preparing a macrocyclic polyester oligomer composition, the process comprising the steps of:
(a) providing an impact modifier and a macrocyclic polyester oligomer; and
(b) mixing the impact modifier with the macrocyclic polyester oligomer
at a high shear using a twin-screw extruder to produce a macrocyclic polyester
oligomer composition;
wherein the macrocyclic polyester oligomer comprises a structural repeat unit of the formula 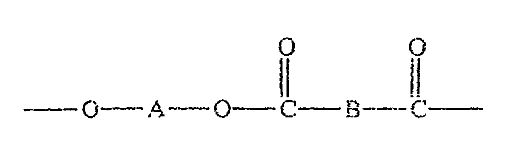 wherein A is an alkylene, or a cycloalkylene or a mono- or polyoxyalkylene group, and B is a divalent aromatic or alicyclic group, and wherein at least a portion of the macrocyclic polyester oligomer is a solid during at least part of the mixing step.

## Patentansprüche

1. Verfahren zur Herstellung einer makrozyklischen Polyesteroligomer-Zusammensetzung, wobei das Verfahren die folgenden Schritte beinhaltet:
Bereitstellen eines Schlagzähigkeitsverbesserers und eines makrozyklischen Polyesteroligomers; und
Mischen des Schlagzähigkeitsverbesserers mit dem makrozyklischen Polyesteroligomer mit einem Doppelschneckenextruder zum Erzeugen einer makrozyklischen Polyesteroligomer-Zusammensetzung, wobei das makrozyklische Polyesteroligomer eine strukturelle Wiederholungseinheit der Formel: 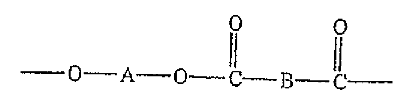 umfasst, wobei A eine Alkylen- oder eine Cycloalkylen- oder eine Mono- oder Polyoxyalkylengruppe und B eine zweiwertige aromatische oder alizyklische Gruppe ist.

2. Verfahren nach Anspruch 1, wobei der Mischschritt bei einer Temperatur zwischen 70°C und 140°C durchgeführt wird.

3. Verfahren nach Anspruch 1 oder 2, wobei der Mischschritt bei einer Temperatur von gleich oder unter 150°C durchgeführt wird.

4. Verfahren nach einem der vorherigen Ansprüche, wobei der Doppelschneckenextruder dispersives und distributives Mischen durchführt.

5. Verfahren nach einem der vorherigen Ansprüche, wobei die Aufenthaltszeit im Doppelschneckenextruder zwischen 30 Sekunden und 90 Sekunden beträgt.

6. Verfahren nach einem der vorherigen Ansprüche, wobei im Wesentlichen das gesamte makrozyklische Polyesteroligomer ein Feststoff während des Mischschrittes ist.

7. Verfahren nach einem der Ansprüche 1 bis 5, wobei wenigstens 30 Gew.-% des makrozyklischen Polyesteroligomers ein Feststoff während des Mischschrittes sind.

8. Verfahren nach einem der vorherigen Ansprüche, wobei der Schlagzähigkeitsverbesserer wenigstens eine Funktionsgruppe umfasst, die mit wenigstens einer Endgruppe des makrozyklischen Polyesterohgomers reagieren kann.

9. Verfahren nach einem der vorherigen Ansprüche, wobei der Schlagzähigkeitsverbesserer ein Pfropfcopolymer, ein Kern-Schale-Copolymer oder ein Blockcopolymer umfasst.

10. Verfahren nach einem der Ansprüche 1 bis 8, wobei der Schlagzähigkeitsverbesserer ein Polymer umfasst, das wenigstens ein Monomer umfasst, das ausgewählt ist aus der Gruppe bestehend aus einem Alken, einem Alkadien, einem Aren, einem Acrylat und einem Alkohol.

11. Verfahren nach einem der Ansprüche 1 bis 8, wobei der Schlagzähigkeitsverbesserer ein funktionalisiertes Ethylencopolymer umfasst.

12. Verfahren nach Anspruch 11, wobei das funktionalisierte Ethylencopolymer ein polares nichtreaktives Monomer umfasst.

13. Verfahren nach Anspruch 11, wobei das funktionalisierte Ethylencopolymer ein polares reaktives Monomer umfasst.

14. Verfahren nach Anspruch 1, wobei der Schlagzähigkeitsverbesserer ausgewählt ist aus der Gruppe bestehend aus einem Terpolymer, das Folgendes umfasst: Ethylen, Butylacrylat und Glycidylmethacrylat; ein Polyolefin; ein Copolymer, das Maleinanhydrid umfasst; ein Kern-Schale-Copolymer mit einem Kern, der Acrylat, Butadien, Styrol oder Kombinationen davon umfasst; ein Copolymer, das Ethylen, Butylacrylat, Methylacrylat oder Kombinationen davon umfasst; ein Harz, das Glycidylmethacrylat, Maleinanhydrid oder Kombinationen davon umfasst; und ein Epoxy-funktionalisiertes Harz.

15. Verfahren nach einem der vorherigen Ansprüche, wobei der Schlagzähigkeitsverbesserer in der makrozyklischen Polyesteroligomer-Zusammensetzung in einer Menge von wenigstens 10 Gew.-% vorliegt.

16. Verfahren nach einem der vorherigen Ansprüche, wobei der Schlagzähigkeitsverbesserer in der makrozyklischen Polyesteroligomer-Zusammensetzung in einer Menge von wenigstens 20 Gew.-% vorliegt.

17. Verfahren nach einem der vorherigen Ansprüche, wobei der Schlagzähigkeitsverbesserer in der makrozyklischen Polyesteroligomer-Zusammensetzung in einer Menge von wenigstens 30 Gew.-% vorliegt.

18. Verfahren nach einem der vorherigen Ansprüche, das ferner das Erhitzen der makrozyklischen Polyesteroligomer-Zusammensetzung bei einer erhöhten Temperatur beinhaltet, um das makrozyklische Polyesteroligomer zu polymerisieren.

19. Verfahren nach Anspruch 18, wobei der Erhitzungsschritt das Erhitzen der makrozyklischen Polyesteroligomer-Zusammensetzung in Anwesenheit eines Katalysators beinhaltet.

20. Verfahren nach Anspruch 18, wobei die makrozyklische Polyesteroligomer-Zusammensetzung ferner einen Katalysator beinhaltet.

21. Verfahren nach Anspruch 19 oder 20, wobei der Katalysator Butyldihydroxyzinnchlorid beinhaltet.

22. Herstellungsartikel, der mit dem Verfahren nach einem der Ansprüche 1-21 erzeugt wurde.

23. Verfahren nach einem der Ansprüche 1 - 21, wobei wenigstens ein Teil des makrozyklischen Polyesteroligomers ein Feststoff während des Mischschrittes ist.

24. Verfahren zur Herstellung einer makrozyklischen Polyesteroligomer-Zusammensetzung, wobei das Verfahren die folgenden Schritte beinhaltet:
(a) Bereitstellen eines Schlagzähigkeitsverbesserers und eines makrozyklischen Polyesteroligomers; und
(b) Mischen des Schlagzähigkeitsverbesserers mit dem makrozyklischen Polyesteroligomer mit einer hohen Scherung mit einem Doppelschneckenextruder zum Erzeugen einer makrozyklischen Polyesteroligomer-Zusammensetzung;
wobei das makrozyklische Polyesteroligomer eine strukturelle Wiederholungseinheit der Formel: 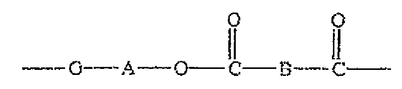 umfasst, wobei A eine Alkylen- oder eine Cycloalkylen- oder eine Mono- oder Polyoxyalkylengruppe und B eine zweiwertige aromatische oder alizyklische Gruppe ist, und wobei wenigstens ein Teil des makrozyklischen Polyesteroligomers ein Feststoff während wenigstens einem Teil des Mischschrittes ist.

## Revendications

1. Procédé de préparation d'une composition d'oligomère de polyester macrocyclique, le procédé comprenant les étapes consistant à :
procurer un modificateur d'impact et un oligomère de polyester macrocyclique ; et mélanger le modificateur d'impact avec l'oligomère de polyester macrocyclique en utilisant une extrudeuse bivis pour produire une composition d'oligomère de polyester macrocyclique,
dans lequel l'oligomére de polyester macrocyclique comprend une unité structurale récurrente de formule 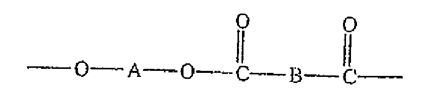 dans laquelle A est un alkylène ou un cycloalkylène ou un groupe mono- ou polyoxyalkyléne, et B est un groupe aromatique ou alicyclique divalent.

2. Procédé selon la revendication 1, dans lequel l'étape de mélange est réalisée à une température comprise entre 70°C et 140°C.

3. Procédé selon la revendication 1 ou 2, dans lequel l'étape de mélange est réalisée à une température inférieure ou égale à 150°C.

4. Procédé selon l'une quelconque des revendications précédentes, dans lequel l'extrudeuse bivis réalise un mélange dispersif et distributif.

5. Procédé selon l'une quelconque des revendications précédentes, dans lequel le temps de résidence dans l'extrudeuse bivis se situe entre 30 secondes et 90 secondes.

6. Procédé selon l'une quelconque des revendications précédentes, dans lequel essentiellement l'ensemble de l'oligomère de polyester macrocyclique est un solide au cours de l'étape de mélange.

7. Procédé selon l'une quelconque des revendications 1 à 5, dans lequel au moins 30 % en poids de l'oligomère de polyester macrocyclique est un solide au cours de l'étape de mélange.

8. Procédé selon l'une quelconque des revendications précédentes, dans lequel le modificateur d'impact comprend au moins un groupe fonctionnel qui est capable de réagir avec au moins un groupe terminal de l'oligomère de polyester macrocyclique.

9. Procédé selon l'une quelconque des revendications précédentes, dans lequel le modificateur d'impact comprend un copolymère greffé, un copolymère coeur écorce ou un copolymère à bloc.

10. Procédé selon l'une quelconque des revendications 1 à 8, dans lequel le modificateur d'impact comprend un polymère comprenant au moins un monomère choisi dans le groupe constitué d'un alcène, d'un alcadiène, d'un arène, d'un acrylate et d'un alcool.

11. Procédé selon l'une quelconque des revendications 1 à 8, dans lequel le modificateur d'impact comprend un copolymère d'éthylène fonctionnalisé.

12. Procédé selon la revendication 11, dans lequel le copolymère d'éthylène fonctionnalisé comprend un monomère non réactif polaire.

13. Procédé selon la revendication 11, dans lequel le copolymère d'éthylène fonctionnalisé comprend un monomère réactif polaire.

14. Procédé selon la revendication 1, dans lequel le modificateur d'impact est choisi dans le groupe constitué d'un terpolymère comprenant de l'éthylène, de l'acrylate de butyle et du méthacrylate de glycidyle ; d'une polyoléfine ; d'un copolymère comprenant de l'anhydride maléique ; d'un copolymère coeur écorce ayant un coeur comprenant de l'acrylate, du butadiène, du styrène ou des combinaisons de ceux-ci ; d'un copolymère comprenant de l'éthylène, de l'acrylate de butyle, de l'acrylate de méthyle ou des combinaisons de ceux-ci ; d'une résine comprenant du méthacrylate de glycidyle, de l'anhydride maléique ou des combinaisons de ceux-ci ; et d'une résine à fonction époxy.

15. Procédé selon l'une quelconque des revendications précédentes, dans lequel le modificateur d'impact est présent dans la composition d'oligomère de polyester macrocyclique en une quantité d'au moins 10 pour cent en poids.

16. Procédé selon l'une quelconque des revendications précédentes, dans lequel le modificateur d'impact est présent dans la composition d'oligomère de polyester macrocyclique en une quantité d'au moins 20 pour cent en poids.

17. Procédé selon l'une quelconque des revendications précédentes, dans lequel le modificateur d'impact est présent dans la composition d'oligomère de polyester macrocyclique en une quantité d'au moins 30 pour cent en poids.

18. Procédé selon l'une quelconque des revendications précédentes, comprenant en outre le chauffage de la composition d'oligomère de polyester macrocyclique à une température élevée afin de polymériser l'oligomère de polyester macrocyclique.

19. Procédé selon la revendication 18, dans lequel l'étape de chauffage comprend le chauffage de la composition d'oligomère de polyester macrocyclique en présence d'un catalyseur.

20. Procédé selon la revendication 18, dans lequel la composition d'oligomère de polyester macrocyclique comprend en outre un catalyseur.

21. Procédé selon la revendication 19 ou 20, dans lequel le catalyseur comprend du chlorure de butyldihydroxyétain.

22. Article de fabrication produit en utilisant le procédé selon l'une quelconque des revendications 1 à 21.

23. Procédé selon l'une quelconque des revendications 1 à 21, dans lequel au moins une portion de l'oligomère de polyester macrocyclique est un solide au cours de l'étape de mélange.

24. Procédé de préparation d'une composition d'oligomère de polyester macrocyclique, le procédé comprenant les étapes consistant à :
(a) procurer un modificateur d'impact et un oligomère de polyester macrocyclique ; et
(b) mélanger le modificateur d'impact avec l'oligomère de polyester macrocyclique à cisaillement élevé en utilisant une extrudeuse bivis pour produire une composition d'oligomère de polyester macrocyclique,
dans lequel l'oligomère de polyester macrocyclique comprend une unité structurale récurrente de formule 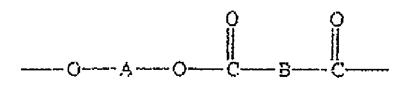 dans laquelle A est un alkylène ou un cycloalkylène ou un groupe mono- ou polyoxyalkylène, et B est un groupe aromatique ou alicyclique divalent, et où au moins une portion de l'oligomère de polyester macrocyclique est un solide au moins au cours d'une partie de l'étape de mélange.
